# EUROPEAN PATENT APPLICATION

(11) **EP 3 858 516 A1**
(43) Date of publication of application: **04.08.2021**
(21) Application number: 21158834.8
(22) Date of filing: 23.02.2021
(51) Int. Cl.: B22F 1/00, B22F 9/08, B33Y 70/10, C22C 1/05

(54) **MODIFIED ALLOY POWDER AND MODIFICATION METHOD THEREOF**

(30) Priority: 30.01.2020 TW 109103122
(71) Applicant: National Chung Shan Institute of Science and Technology, Taoyuan City 325 (TW)
(72) Inventor: CHANG, KAI-CHUN, 32546 Taoyuan City (TW); HSU, TZU-HOU, 32546 Taoyuan City (TW); YEH, AN-CHOU, 32546 Taoyuan City (TW); LO, CHING-YUAN, 32546 Taoyuan City (TW); CHEN, CHIH-PENG, 32546 Taoyuan City (TW); JEN, KUO-KUANG, 32546 Taoyuan City (TW)
(74) Representative: DTS Patent- und Rechtsanwälte Schnekenbühl und Partner mbB

(57) **Abstract**

A modified alloy powder includes a powdered alloy (1); and a carbide powder (2), mixed in the powdered alloy (1); wherein the carbide powder (2 )has a particle size smaller than that of the powdered alloy (1), and the carbide powder (2) is dedicated to powder bed selective laser melting and laser metal deposition technology. Being used as a grain refiner and a grain growth inhibitor, the effect of refinement in the grain size of final products and improvement of the workpiece strength can be achieved.

## Description

### BACKGROUND OF THE INVENTION

### 1. Field of the Invention

The present disclosure relates to a modified alloy powder and a modification method thereof, and in particular to a modified alloy powder added with heterogeneous inoculant particles and a modification method thereof.

### 2. Description of the Related Art

Compared with the traditional manufacturing technology, the advantage of the metal fusion additive manufacturing technology (powder bed selective laser melting and laser metal deposition technology) is that it can manufacture customized and high value-added products with complex structures. Under the condition of no complicated manufacturing process, the design can be realized quickly, and the concept of "free manufacturing" can be achieved, which is incomparable with the traditional processing. Research in recent years has shown that the mechanical properties of the materials made by the existing additive manufacturing can be similar to those made by the traditional forging process.

Since the cooling of the molten pool during the metal fusion additive manufacturing will cause the crystal grains to grow in the direction of the solidification of the molten pool, and the repeated melting-solidification process will make the directional structure grow in the additive manufacturing direction, the microstructure and mechanical properties of alloys made by additive manufacturing will be anisotropic, and the grain size is much larger than that of traditional forging materials, which limits the application of workpieces made by additive manufacturing to supporting structures.

Therefore, in view of this, upholding many years of rich experience in design, development and actual manufacturing in the related industry, the existing structure and deficiencies is studied and improved to provide a modified alloy powder in order to achieve the purpose of better practical value.

### BRIEF SUMMARY OF THE INVENTION

In view of the shortcomings of the above-mentioned conventional technology, a main object of the present invention is to provide a modified alloy powder that uses the added heterogeneous inoculant particles to nucleate and pin in the directional grain growth during the fusion additive manufacturing in order to reduce the anisotropic. Being used as a grain refiner and a grain growth inhibitor, the effect of refinement in the grain size of final products and improvement of the workpiece strength can be achieved.

To achieve the above object, the present invention provides a modified alloy powder, which includes a powdered alloy; and a carbide powder, mixed in the powdered alloy; wherein the carbide powder has a particle size smaller than that of the powdered alloy, and the carbide powder is dedicated to powder bed selective laser melting and laser metal deposition technology.

Preferably, the carbide powder may be carbide particles having a particle size of smaller than 10 µm.

Preferably, the powdered alloy may be spherical gas atomized powder having a particle size of 10 to 100 µm.

Preferably, the carbide powder may be chemically synthesized titanium carbide and niobium carbide powder.

Preferably, the spherical gas atomized powder may be manufactured by molten bath gas atomization, which contains an alloy mainly composed of nickel, iron and chromium.

Preferably, the carbide powder mixed in the powdered alloy can account for a maximum of 1 wt% of a total weight of the modified alloy powder, which means that based on the total weight of the modified alloy powder, a percentage of the carbide powder mixed in the powdered alloy is less than or equal to 1 wt%.

A further object of the present invention is to provide a modification method of an alloy powder in order to improve the upward growth of crystal grains along the thermal gradient during the additive manufacturing process. Therefore, heterogeneous inoculant particles are added to the powder to nucleate a large number of small grains, suppress the crystal grain growth during the laser melting process and reduce the grain size. In addition, the residual stress imparted by the additive manufacturing is usually insufficient to trigger effective recrystallization, so the grains of the additive manufacturing product after heat treatment (homogenization, annealing, aging, etc.) will mostly grow. By adding the heterogeneous inoculant particles. to the block material, these added impurities can effectively pin in the growth of crystal grains, thereby achieving the effect of refinement.

To achieve the above object, the present invention provides a modification method of an alloy powder. The modification method includes mixing a powdered alloy and a carbide powder to form an alloy powder; sieving the alloy powder with a 180 µm mesh screen; and putting the mixed alloy powder into a powder mixing container for ball-free powder mixing to complete the modification method; wherein the carbide powder has a particle size smaller than that of the powdered alloy, and the carbide powder is dedicated to powder bed selective laser melting and laser metal deposition technology.

The above summary, the following detailed description and drawings are all for the purpose of further explaining the methods, means and effects adopted by the present invention for achieving the intended purpose. Other objects and advantages of the present invention will be described in the following description and drawings.

### BRIEF DESCRIPTION OF THE DRAWINGS

FIG. 1 is an image showing the modified alloy powder of the present invention.
FIG. 2 is the electron backscatter diffraction inverse pole map of the example without the addition of the heterogeneous inoculant particles.
FIG. 3 is the electron backscatter diffraction inverse pole map of the example with the addition of the heterogeneous inoculant particles of the present invention.
FIG. 4 is the electron backscatter diffraction inverse pole map of the example without the addition of the heterogeneous inoculant particles after the additive manufacturing process.
FIG. 5 is the electron backscatter diffraction inverse pole map of the example with the addition of the heterogeneous inoculant particles of the present invention after the additive manufacturing process.
Fig. 6 is a flowchart showing the modification method of the alloy powder of the present invention.

### DETAILED DESCRIPTION OF THE INVENTION

To facilitate understanding of the object, characteristics and effects of this present disclosure, embodiments together with the attached drawings for the detailed description of the present disclosure are provided.

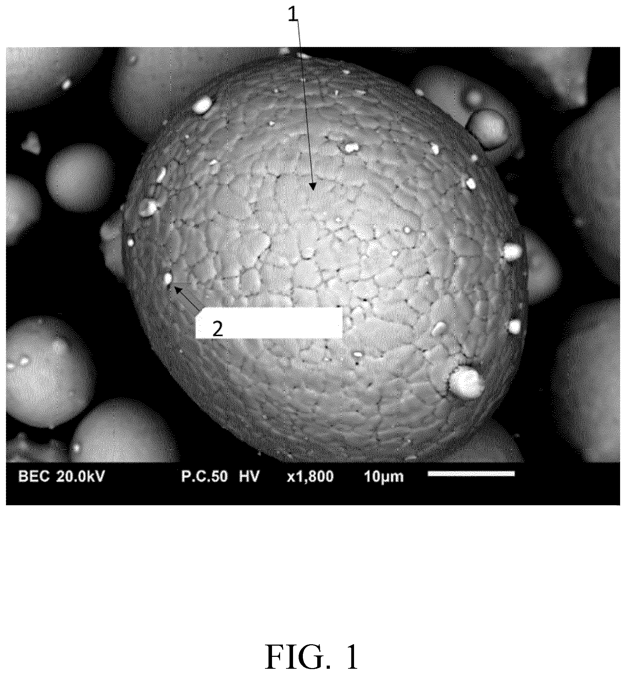

Please refer to FIG. 1, which is an image showing the modified alloy powder of the present invention. It can be seen that the added carbide powder 2 is uniformly attached to the powdered alloy 1. As shown in the figure, the present invention provides a modified alloy powder, which includes the powdered alloy 1 and the carbide powder 2. The carbide powder 2 is mixed in the powdered alloy 1, in which the particle size of the carbide powder 2 is smaller than that of the powdered alloy 1, and the carbide powder 2 is dedicated to powder bed selective laser melting and laser metal deposition technology. By adding heterogeneous inoculant particles (the carbide powder 2) to the block material (the powdered alloy 1), these added impurities can suppress the crystal grain growth effectively, thereby achieving the effect of grain refinement. However, this example is not used to limit the present invention.

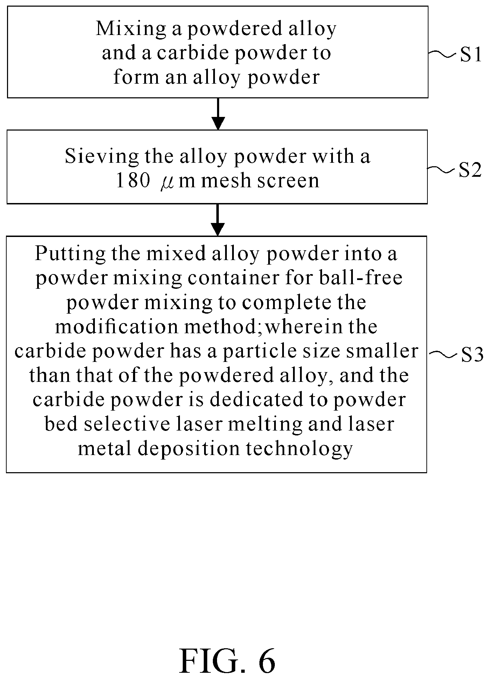

Please refer to Fig. 6, which is a flowchart showing the modification method of the alloy powder of the present invention. As shown in the figure, step S1: mixing powdered alloy 1 and carbide powder 2 to form alloy powder. Step S2: Sieving the alloy powder with a 180 µm mesh screen to avoid agglomeration of the added powder. Step S3: Putting the mixed alloy powder into a powder mixing container for ball-free powder mixing, sieving again after completion, and checking the uniformity of mixing with an electron microscope. After powder mixing, most of the harder heterogeneous inoculant particles (carbide powder 2) should be embedded in the powdered alloy 1 to complete the modification purpose. The mixed powder should be as shown in FIG. 1. The modified powder can be directly processed by laser additive manufacturing to achieve the effect of the present invention without additional post-processing.

In this embodiment, the carbide powder 2 may be carbide particles having a particle size of smaller than 10 µm to ensure that the carbide will not cause defects in the products of the additive manufacturing process and can be uniformly dispersed.

In this embodiment, the powdered alloy 1 may be spherical gas atomized powder having a particle size of 10 to 100 µm to ensure that the mixed powder maintains fluidity during the additive manufacturing process.

In this embodiment, powdered alloy 1 is spherical gas atomized powder obtained by molten bath gas atomized, which is an alloy mainly containing nickel, iron, and chromium, while carbide powder 2 is chemically synthesized titanium carbide and niobium carbide powder. However, the present invention is not limited thereto. The use of the main powdered alloy 1 should be changed according to the needs of users, and the selection of the carbide powder 2 should be matched with the main powdered alloy 1 to ensure the bonding between the alloy and the carbide and avoid the formation of harmful structures. In this step, thermodynamic simulation (such as: Thermo-calc, PANDAT, Jmatpro) can be used to determine the type of carbide added.

The carbide chemical synthesis method of the present invention can be Carbothermic Reduction, which uniformly mixes titanium oxide (TiO₂) and petroleum coke powder by ball milling operation using petroleum coke powder as the reducing agent, and then the resistance furnace is placed for heating to perform the reduction reaction of the metal oxide, followed by the reduction of titanium oxide (TiO₂) to titanium carbide (TiC), but the present invention is not limited thereto.

TiO₂ + 3C => TiC + 2CO(g)

In this embodiment, the carbide powder 2 mixed in the powdered alloy 1 can account for a maximum of 1 wt% of the total weight of the modified alloy powder, that is, in the total weight of the modified alloy powder, the percentage of carbide powder 2 mixed in powdered alloy 1 is less than or equal to 1 wt%, and the percentage of carbide powder 2 should not be too much to avoid the decrease of powder fluidity or influence on toughness of the finished product.

In order to improve the upward growth of crystal grains along the thermal gradient during the additive manufacturing process, the present invention adds the heterogeneous inoculant particles (carbide powder 2) to the powder for modification to nucleate a large number of small crystal grains, thereby suppressing the grain growth during the laser melting process and refining the finished grains. In addition, the residual stress given by the additive manufacturing process is usually insufficient to trigger effective recrystallization, so the grains of the additive manufacturing product will mostly grow after heat treatment (homogenization, annealing, aging, etc.). By adding the heterogeneous inoculant particles (carbide powder 2) to the block material (powdered alloy 1), these added impurities can effectively pin in the growth of crystal grains, thereby achieving the effect of refinement. In the traditional casting process, in order to control the grain size, borides, oxides or carbides are sometimes added as the heterogeneous inoculant particles. These particles can reduce the surface energy the material needs to overcome for solidification and nucleation and the sufficient overcooling in order to allow the generation of a large number of crystal nuclei in the casting molten soup, thereby refining the structure grains. Therefore, this theory is substituted into the additive manufacturing, and the high melting point of impurity is added to the powder and remained in the molten soup, thereby refining the grain size and suppressing the texture.

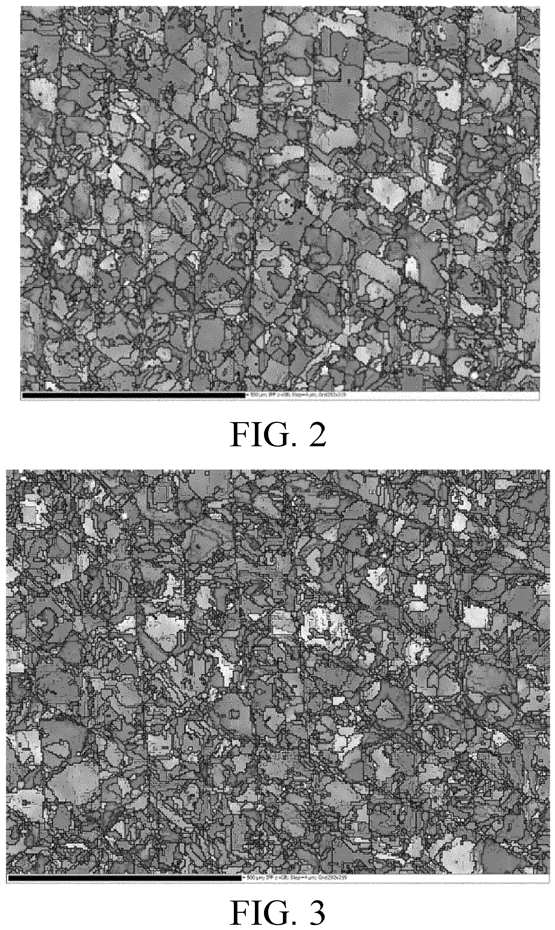

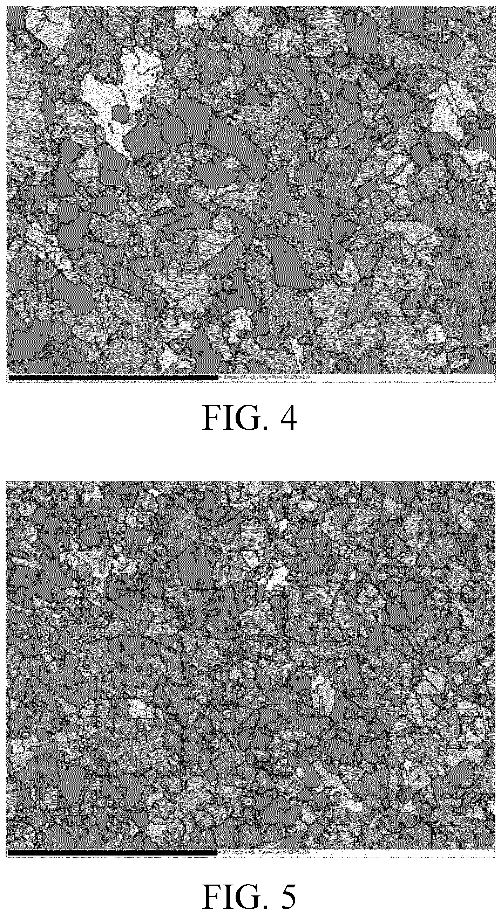

In order to make the above-mentioned features and advantages of the present invention more obvious and easy to be understood, the following examples of experiments, together with the accompanying drawings and tables, are described in detail as what follows. Please refer to FIGS. 2 to 5. FIG. 2 is the electron backscatter diffraction inverse pole map of the example without the addition of the heterogeneous inoculant particles. FIG. 3 is the electron backscatter diffraction inverse pole map of the example with the addition of the heterogeneous inoculant particles of the present invention. FIG. 4 is the electron backscatter diffraction inverse pole map of the example without the addition of the heterogeneous inoculant particles after the additive manufacturing process. FIG. 5 is the electron backscatter diffraction inverse pole map of the example with the addition of the heterogeneous inoculant particles of the present invention after the additive manufacturing process.

<Experimental Example 1> The experimental example of the present invention mixed the nickel-iron alloy gas atomized powder with titanium carbide and niobium carbide, and performed the powder bed selective laser melting, and then the finished product was compared with the one without addition. The result is shown in FIGS. 2 and 3, from which it is clearly observed that after the addition of the carbides (FIG. 3), the material has a finer grain structure, and the statistical grain size is smaller than that without addition (FIG. 2). The change of texture strength is listed in Table 1. The closer the M.U.D value representing texture strength is to 1, the less obvious the texture will be. The M.U.D value of this experimental example decreased from 5.36 to 3.85 (up to 28% reduction) after the addition of the heterogeneous inoculant particles, indicating that the anisotropic of the material was significantly improved.

**Table 1**

| | Relative texture strength after additive manufacturing |
|---|---|
| Without the addition of the heterogeneous inoculant particles | 5.36 |
| With the addition of the heterogeneous inoculant particles | 3.85 |

<Experimental example 2> In this experimental example, the influence of additives on the heat treatment of the block material was different apparently. Two block materials of Experimental Example 1 were put into a high temperature furnace at 1100 degrees Celsius for the heat treatment. The results are shown in FIGS. 4 and 5. It can be clearly observed that the inoculant particles has the effect of pin in the grain growth at high temperatures (FIG. 5).

<Experimental Example 3> In this experimental example, the influence of inoculant particles on mechanical properties was different apparently. The test coupon of Experimental Example 3 were heated for the same aging heat treatment and performed the tensile test. The results are shown in Table 2. The maximum tensile strength is increased by 93 Mpa after the powder is modified by adding the heterogeneous inoculant particles, and the addition of the heterogeneous inoculant particles in the method of the present invention can increase the strength of the material without affecting the ductility and elastic modulus.

**Table 2**

| | Yield strength | Maximum tensile strength | Ductility | Young's coefficient |
|---|---|---|---|---|
| Without the addition of the heterogeneous inoculant particles | 1039Mpa | 1312Mpa | 22.5% | 203Gpa |
| With the addition of the heterogeneous inoculant particles | 1165.7Mpa | 1405.3Mpa | 21.1% | 207Gpa |

In summary, in the present invention, the heterogeneous inoculant particles (carbide powder 2) is added to the block material (powdered alloy 1). These added impurities can effectively pin in the growth of grains, thereby achieving the effect of grain refinement. In addition, the difference in grain growth and anisotropic of material properties during the metal additive manufacturing process is eliminated, and the strength of metal materials by additive manufacturing is improved without affecting the ductility.

While the present disclosure has been described by means of specific embodiments, numerous modifications and variations could be made thereto by those skilled in the art without departing from the scope and spirit of the present disclosure set forth in the claims.

## Claims

1. A modified alloy powder, comprising:
a powdered alloy (1); and
a carbide powder, mixed in the powdered alloy (1);
wherein the carbide powder has a particle size smaller than that of the powdered alloy (1), and the carbide powder is dedicated to powder bed selective laser melting and laser metal deposition technology.

2. The modified alloy powder of claim 1, wherein the carbide powder is carbide particles having a particle size of smaller than 10 µm.

3. The modified alloy powder of claim 2, wherein the carbide powder is chemically synthesized titanium carbide and niobium carbide powder.

4. The modified alloy powder of claim 1, wherein the powdered alloy (1) is spherical gas atomized powder having a particle size of 10 to 100 µm.

5. The modified alloy powder of claim 4, wherein the spherical gas atomized powder is manufactured by molten bath gas atomized and contains an alloy mainly composed of nickel, iron and chromium.

6. The modified alloy powder of claim 1, wherein based on a total weight of the modified alloy powder, a percentage of the carbide powder mixed in the powdered alloy (1) is less than or equal to 1wt%.

7. A modification method of an alloy powder, comprising:
mixing a powdered alloy and a carbide powder to form an alloy powder (S1);
sieving the alloy powder with a 180 µm mesh screen (S2); and
putting the mixed alloy powder into a powder mixing container for ball-free powder mixing to complete the modification method;
wherein the carbide powder has a particle size smaller than that of the powdered alloy, and the carbide powder is dedicated to powder bed selective laser melting and laser metal deposition technology (S3).

8. The modification method of claim 7, wherein the carbide powder is carbide particles having a particle size of smaller than 10 µm.

9. The modification method of claim 7, wherein the powdered alloy is spherical gas atomized powder having a particle size of 10 to 100 µm.

10. The modification method of claim 7, wherein in a total weight of the modified alloy powder, a percentage of the carbide powder mixed in the powdered alloy is less than or equal to 1wt%.
